# EUROPEAN PATENT SPECIFICATION

(11) **EP 1 011 307 B1**
(45) Date of publication and mention of the grant of the patent: **04.06.2003**
(21) Application number: 97950140.0
(22) Date of filing: 07.11.1997
(51) Int. Cl.: A01D 90/00, A01K 5/00, A01D 90/10

(54) **CUTTER-MIXER AND BED-STRAW SPREADER WAGON PROVIDED OF A PERFECTED GROUP FOR THE DISTRIBUTION OF THE STRAW OUTSIDE THE WAGON**
ZERKLEINERUNGSEINRICHTUNG UND EINSTREUVERTEILWAGEN MIT VERBESSERTEN VERTEILER FÜR DAS STROH AUS DEM WAGEN
BENNE MELANGEUSE ET EPANDEUSE DE PAILLE POUR LITIERE, EQUIPEE D'UN DISPOSITIF PERFECTIONNE D'EPANDAGE DE LA PAILLE HORS DE LA BENNE

(30) Priority: 08.11.1996 IT VI960183
(43) Date of publication of application: 28.06.2000
(73) Proprietor: SEKO S.p.A., 35010 Curtarolo (Padova) (IT)
(72) Inventor: LOPPOLI, Giuseppe, I-35010 Grantorto (IT)
(74) Representative: Bonini, Ercole
(86) International application number: PCT/EP97/06188
(87) International publication number: WO 98/020728

(56) References cited:
- EP-A- 0 404 028
- EP-A- 0 494 812
- EP-A- 0 793 911
- IT-B1- 1 267 700

## Description

The invention concerns a cutter-mixer and bed-straw spreader wagon, suitable for effecting the cutting and the mixing of fibrous products such as fodder, grass or straw silages, provided of a perfected group for the distribution of the straw outside the wagon for making litters.

It is known that for making litters are used special cutter - mixer wagons which are supplied of a distribution group suitable for tossing the straw outside the wagon are used. EP-A-0 494 812 discloses such a wagon.

In particular the cutter-mixer and bed-straw spreader wagon which is object of the deposit N° VI94A000047 named by the same inventor of the present patent, which is able to cut and mix every product for a zootechnical use and is also provided of a group for the distribution of the straw outside the wagon for realising litters is known.

The distribution group which equips the car that is object of the said patent, is substantially formed of a conduct which by a fan conveys the cut straw from the screw feeders of said wagon to an adjustable delivery opening, connected to the end of said conduct which directs the throwing of the straw towards the zones where the litters will be realised.

In particular the fan presents the volute applied laterally on one side of the wagon, inside which is arranged an impeller supplied of blades with a curved outline which is started by a hydraulic engine. Therefore it is substantially a centrifugal fan of the known kind.

One of the inconvenient which the distribution group, which equips the wagon that is object of the said patent, presents is that the throwing distance which this distribution group realises is rather limited.

The present patent intends to overcome such a limitation realising a cutter-mixer and bed-straw spreader wagon which is supplied of a perfected distribution group for the straw suitable for realising throwing distances much greater than the cutter-mixer and bed-straw spreader wagons of the known kind in general and particularly in comparison with the cutter-mixer and bed-straw spreader wagon that is object of the said patent.

It is another purpose that the distribution group for the straw presents the delivery opening, adjustable by a rotation group started by an electrical engine.

The said purposes are achieved with the realisation of a cutter-mixer and bedstraw spreader wagon for fibrous products, the main features of which are according to the main claim.

According to a preferred embodiment of the invention an impeller is provided with four orthogonal blades and a delivery opening is connected to a delivery conduct by a rotation junction suited to put it into rotation so to convey the used material for example straw, in the desired direction.

Advantageously such constructive form of the fan allows to through out some cut and mixed straw to bigger distances than those reachable with the known type fan.

So advantageously though the fuming delivery opening is fixed in end position to said delivery opening, it is of a contained length and so quite lighter. In this way it can be put in rotation by kinematic mechanisms coupled to the rotating joint which are actioned by an electric engine of low power so without the help of heavy and expensive hydraulic actuators.

The said purposes and the advantages will be better stressed during the description of a preferred embodiment given as an indicative but not as a limitative title where:
- fig. 1 shows the wagon of the invention in side view;
- fig. 2 shows the wagon of fig. 1 in frontal view;
- fig. 3 shows schematically and according a radial plane, the impeller detail and the detail of the motorization of the fan which equips the wagon of the invention
- fig 4 shows an outside frontal view the of distribution group which equips the wagon of the invention;
- fig. 5 shows the distribution group of fig. 4 represented in an exploited view;
- fig. 6 shows the distribution group of fig. 4, represented in an upper view and with the regulation shutter of the intaken air completely opened;
- fig. 7 shows the distribution group of fig. 4 represented in upper view and with the regulation shutter of the air located In close position;
- fig. 8 shows in axionometric representation and outwardly the fan detail which equips the distribution group of the wagon of the invention;
- fig. 9 shows the form in an inner view of the wagon itself and from the impeller side;
- fig. 10 shows part of the impeller of the fan which equips the distribution group belonging to the wagon of the invention, in axionometric view and seen through the delivery opening realised in the volute of the fan.

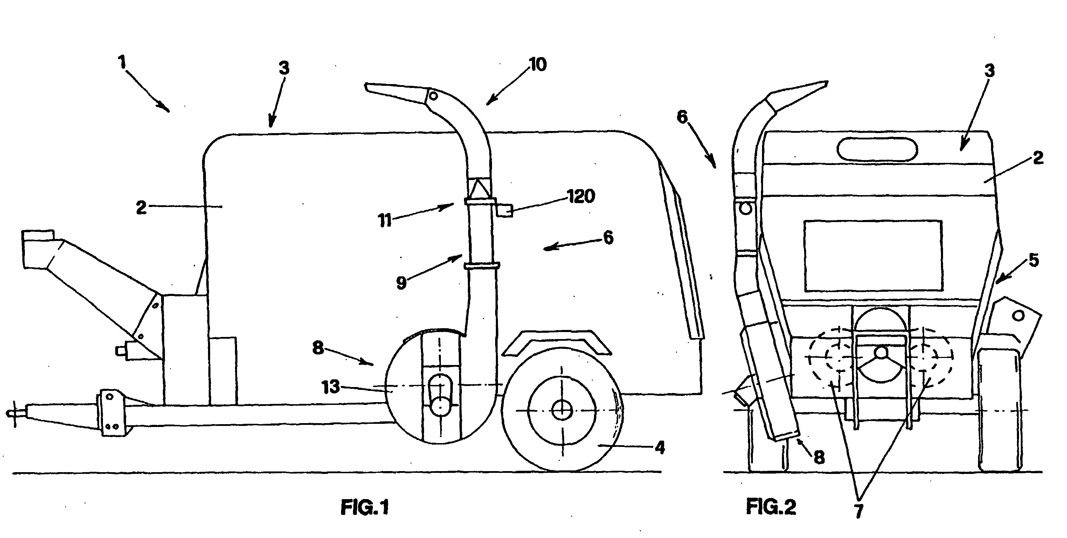

As it can be observed in figs. 1 and 2 the wagon of the invention, on the whole pointed out with 1, comprises a container 2, insisting on wheels 4, that in the upper part presents a charging opening 3 of the material to treat.

The container 2 is preferably realised with a sheet and in correspondence of its bottom is arranged a couple of screw feeders 7 which realise the cutting and the mixing of the material present inside.

On the side of the wagon and in correspondence of the side walls of the container 2, on one side a door 5, through which the cut and mixed product is unloaded outside, is present, while a distribution group, on the whole pointed out with 6, suitable for conveying outside the material that is treated inside the container 2 itself, is arranged on the opposite part.

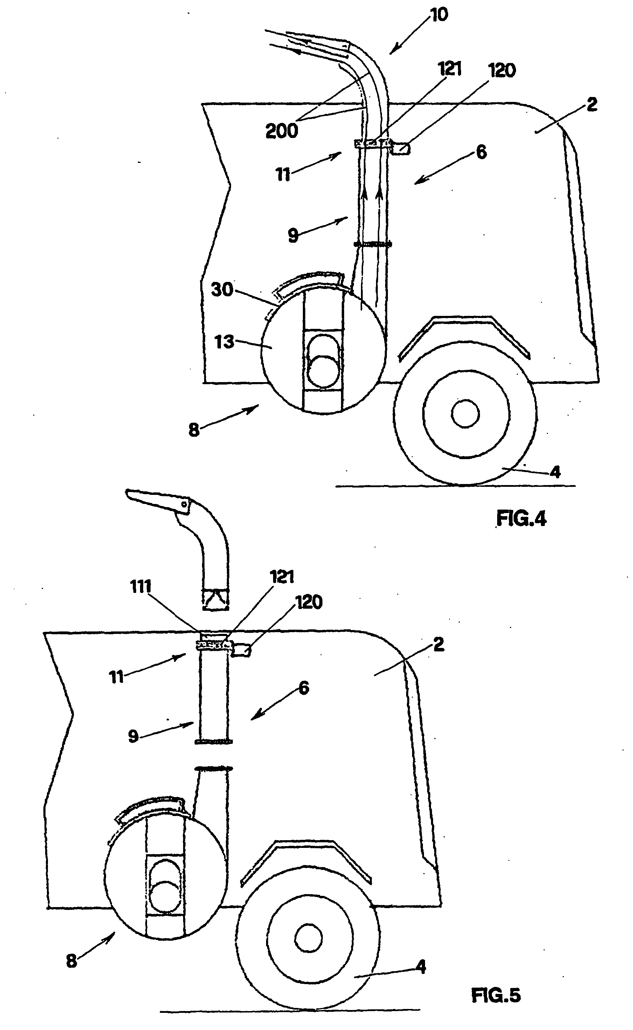

It can be observed in particular that in the figs. 4 and 5 said distribution group 6 comprises:
- a fan 8 fixed to a side wall of the container 2, arranged in an inclined and opposite position to said door 5;
- a delivery conduct 9 of the treated material, which by said fan 8 is taken from the inside of said container 2 and sent outside;
- a delivery opening 10 arranged at one end of said delivery conduct 9, suitable for sending the material in the wanted direction;
- a rotation group, on the whole pointed out with 11, suitable for rotatingly connecting said delivery opening 10 to said delivery conduct 9.

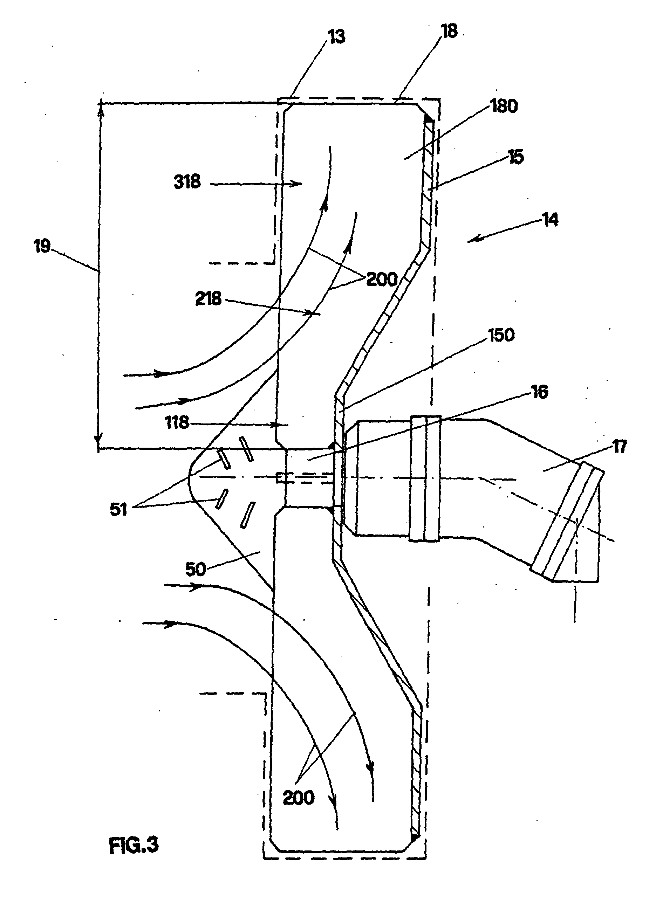

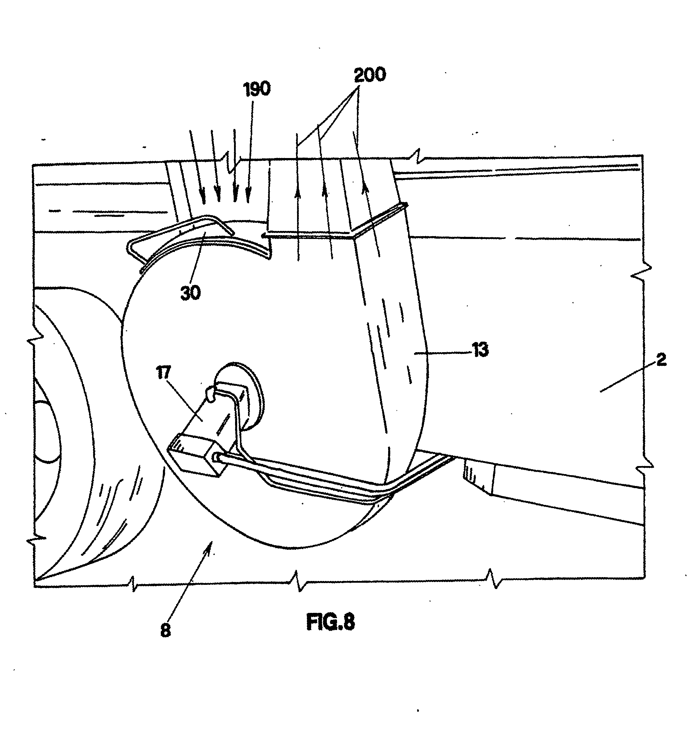

Regarding said fan 8 which is visible also in detail in figs. 3, 8, 9 and 10, it can be observed that it is formed of a volute 13 which is fixed to the wall of the container 2, inside which an impeller 14 formed of a disk 15 that presents the central zone 150 fixed to motorization means formed of an hydraulic engine 17 suitable for starting it and is supplied of four radial blades 18 arranged orthogonally among them, is located.

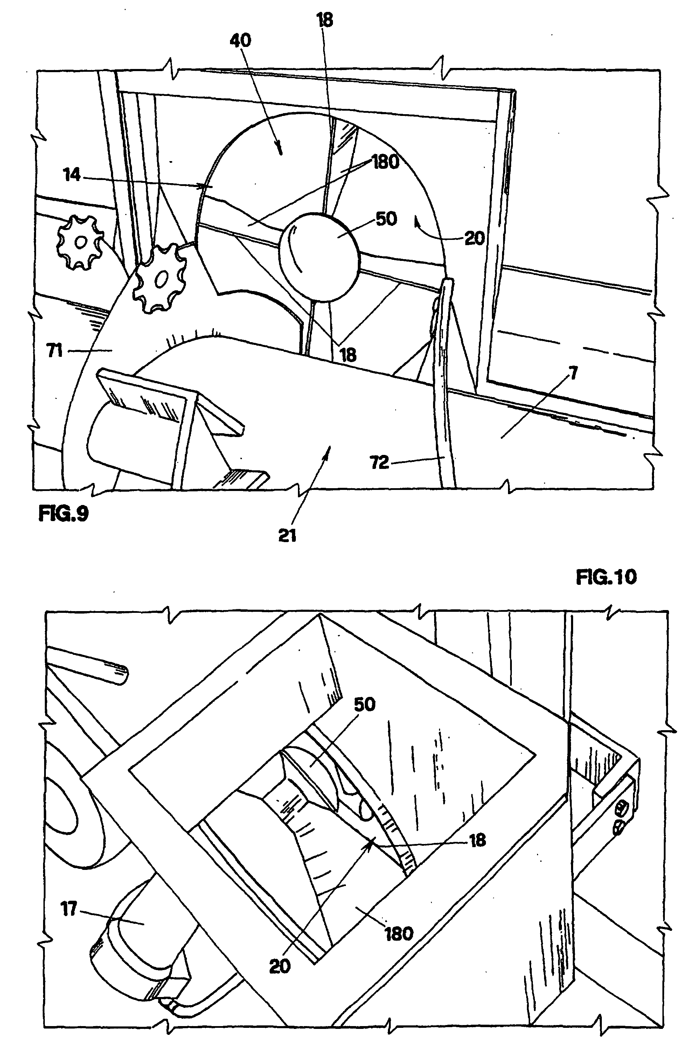

Regarding said blades 18 it can be observed, particularly in fig. 9, that each of them is formed of a metallic sheet with a constant thickness which presents a plane surface 180 having an outline 19 diverging towards the volute 13 beginning from the central zone 150 of the disk 15 where the hydraulic engine 17 is keyed.

In particular it can be observed that said outline 19 of each blade 18 is shaped in order that the central zone 118 of the blade 18 fixed to the shaft 16 of the engine 17 presents a shape substantially rectangular and is connected to an intermediate zone 218 having a substantially trapezoidal form whose smaller base is connected to said central zone 118 and whose greater base is connected to the terminal zone 318 of the blade 18 itself that like said central zone 118 presents a substantially rectangular form.

According to different executive forms, each of the blades 18 could even present a different outline from that one described, though radially divergent towards the volute 13 beginning from the shaft 16 of the engine 17.

Further in another executive variant the number of the blades 18 which form said impeller 14 could be different from four and said blades could be placed with different angulations among them.

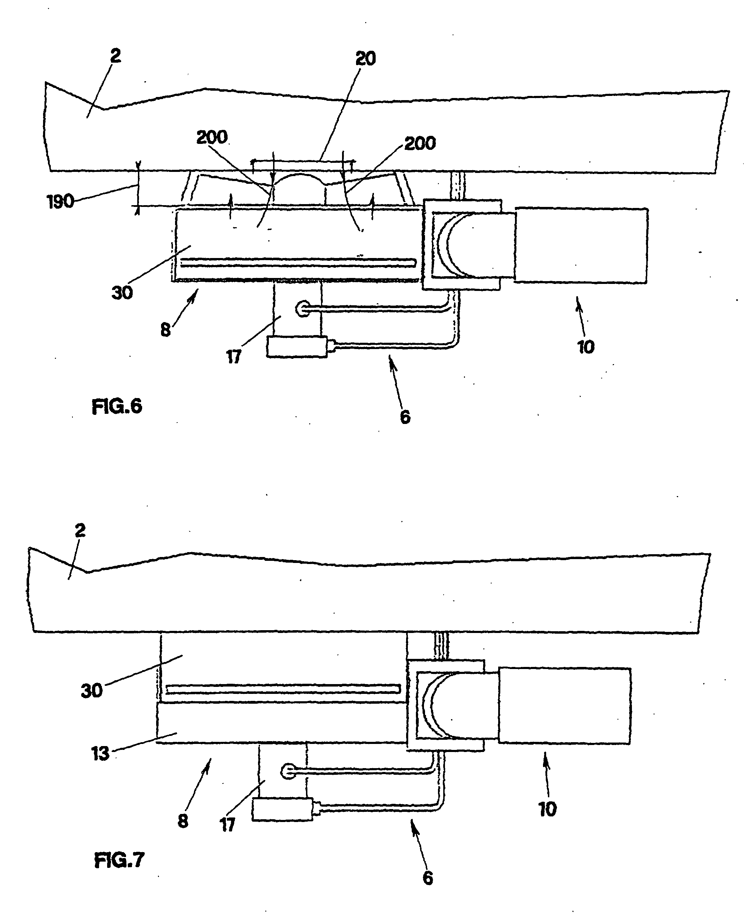

It can be observed in figs. 6 and 7 that the volute 13 of the fan 8 is fixed to the wall of the wagon in order to define a clear span 190 through which the outside air can be sucked up by the inlet opening 20, realised in the volute 13 which, as it can be observed in detail in fig. 9, communicates with the inside of the wagon in the opposite part of the discharge door 5, in correspondence of the intermediate zone 21 of each of the screw feeders 7, in which the spirals 71 and 72, which form it, joint themselves.

At the volute 13 of the fan 8 is fixed the delivery conduct 9 and to it, through the interposition of a rotation group on the whole pointed out with 11 which, as it can be observed, comprises a rotating joint 111 which is put in rotation by an electric engine 120 by a chain 121, a delivery opening 10 is connected.

When the screw feeders 7 and by the hydraulic engine 17 the impeller 14 of the fan 8 are put in rotation, the cut and mixed product, for example straw, whose throwing speed and capacity are regulated changing the position of a suitable shutter 30 visible in the figs. 6 and 7 sliding connected to said volute 13, which chokes the span 190 through which the suction opening 20 of the fan sucks up air from the outside.

The regulation of the air which is sucked up is extremely important because it is such a flow which allows to convey outside the cut material, according to the well known principles which rule the transport processes of the materials by aerial gas.

In detail it can be observed in fig. 9 and in fig. 10 that the diverging conformation towards the volute 13 of each blade 18 and of the reciprocal disposition of the blades which define the diverging conducts 40 unitedly to the fact that the surface 180 of said blades 18 in contact with the material, is plane, contribute to realise from the delivery opening 10 a particularly elevated exit speed of the material which allows to reach throwing distances much superior compared to those reachable using distribution groups of the known kind where centrifugal fans having curved blades are used.

It can be observed even, in particular in fig. 3 and in fig. 9, that in order to help the convey of the material through the suction opening of the volute 13, the central area 118 of the blades 18 is provided with an ogive 50 of conveying the flow 200 of the material. Eventually in order to improve the winding up of the flow of the entering material, the ogive 50 can be provided of cutters 51.

The cutter-mixer wagon of the invention maintain obviously all the characteristics of a normal cutter-mixer wagon and can be used even to execute only the cutting and the mixing of silages and other zoothecnical products which can be discharged according to the normal technique of use through the side door 5.

Further it has been seen that the delivery opening 10 being connected to the delivery conduct 9 in its upper part, presents a length quite reduced and therefore a limited weight, such to be rotated using an electric engine 120 rather than hydraulic actuators as it happens in the applications of the known type.

According to what it has been said it is possible to comprehend that the wagon of the invention, supplied of the perfected distribution group, achieves all the prefixed purposes.

In an executive phase some modifications that as it has been said can regard for example the shape, the number and the dimension of the blades that form the impeller of the fan, can be introduced to the wagon of the invention and particularly to the distribution group that equips it.

The rotation devices of the impeller itself can be eventually changed.

Other variants can be for example different shapes of the delivery opening or different outward configurations of the volute of the fan and of the delivery conduct or other different structures of the choking grid of the intaken air.

## Claims

1. Cutter-mixer and bed-straw spreader wagon (1) for fibrous products comprising:
- a container (2) provided with at least one opening (3) for the introduction of the material to treat;
- at least one distribution group (6) suitable for conveying the treated material outside said container (2) comprising a delivery conduct (9) which presents an end connected to a fan (8) which sucks up the material inside said container (2) and the opposite end supplied of at least one delivery opening (10) suitable for directing outside the jet of said treated material,
said fan comprising a volute (13) fixed to a side of said wagon (2) and communicating with the inside of the wagon by a suction opening (20) arranged in the opposite side of a discharge door (5) present in said container (2), inside said volute (13) being present an impeller (14) formed of a circular disk (15) keyed to motorization means (17) and supplied of a plurality of blades (18), each of which presenting at least one planar surface (180) containing the axis of the shaft (16) of said impeller and having an outline (19) which radially diverges towards said volute (13) beginning from the central zone (150) of said circular disk (15) **characterised in that** the bottom of said container (2) comprises at least one rotating screew feeder (7) supplied of at least one couple of spirals (71, 72) with an opposite winding direction in order to convey the treated material in an intermediate zone (21) of said at least one screw feeder (7), and **in that** said impeller (14) presents an ogive (50) fixed to said blades (18) in correspondence of the central zone (118) of each of them, said ogive (50) being provided with cutters (51) on the outward periphery of said ogive (50), said cutters being suitable for piping said flow (200) of material entering in said volute (13) of said fan (8).

2. Cutter-mixer and bed-straw spreader wagon (1) according to claim 1) **characterised in that** said volute (13) of said fan (8) is fixed spaced out from the wall of the container (2) of said wagon to which is connected, in order to define a clear span (190) of conveying of the outward air to said suction opening (20) of the volute (13) itself, said free light (190) being intercepted by a shutter (30) sliding connected to said volute (13).

3. Cutter-mixer and bed-straw spreader wagon (1) according to claim 1) **characterised in that** each of said blades (18) is realised with a plane sheet whose outline (19), according to the radial direction, is shaped in order to present:
- a central zone (118) of a shape substantially rectangular, fixed to the shaft
(16) which connects said motorization means (17) to said circular disk (15);
- a terminal zone (318) arranged next to said volute (13) and presenting a shape substantially rectangular,
- an intermediate zone (218) of a substantially trapezoidal shape whose smaller base is connected to said central zone (118) and whose greater base is connected to said terminal zone (318).

4. Cutter-mixer and bed-straw spreader wagon (1 ) according to claim 1) **characterised in that** said container (2) is supplied of at least one door (5) for the discharge of the treated material, arranged in correspondence of said intermediate zone (21) of said at least one screw feeder (7) and opposite to said suction opening (20) realised in said volute (13) of said fan (8).

5. Cutter-mixer and bed-straw spreader wagon (1) according to claim 1) **characterised In that** said delivery opening (10) is connected at one end of said delivery conduct (9) by the interposition of a rotation group (11) comprising a rotating joint (111) which connects said delivery conduct (9) to said delivery opening (10) and that is started by a chain (121) mechanically connected to an engine (120).

6. Cutter-mixer and bed-straw spreader wagon (1) according to claim 5) **characterised in that** said engine (120) is an electric one.

7. Cutter-mixer and bed-straw spreader wagon (1) according to claim 1) **characterised in that** said motorization means of said impeller (14) are formed of an hydraulic engine (17).

8. Cutter-mixer and bed-straw spreader wagon (1) according to claim 1) **characterised in that** said blades (18) are four and are arranged orthogonally among them.

## Patentansprüche

1. Schneid-Mix-Vorrichtung und Strohstreuwagen (1) für faserige Produkte, Folgendes umfassend:
- einen Behälter (2) mit wenigstens einer Öffnung (3) zum Einfüllen des zu verarbeitenden Materials;
- wenigstens eine Verteilereinheit (6), die das verarbeitete Material aus dem Behälter (2) herausleitet und eine Ausgabeleitung (9) umfasst, welche an einem Ende mit einem Gebläse (8) verbunden ist, welches das Material aus dem Inneren des Behälters (2) ansaugt, und am anderen Ende wenigstens eine Ausgabeöffnung (10) aufweist, die geeignet ist, den Strahl des verarbeiteten Materials nach außen zu richten,
wobei das Gebläse eine Schnecke (13) umfasst, die an einer Seite des Wagens (2) befestigt ist und mit dem inneren des Wagens kommuniziert durch eine Saugöffnung (20), welche in der einer Entladetür (5) im Behälter (2) gegenüber liegenden Seite angebracht ist,
wobei sich innerhalb der Schnecke (13) ein Laufrad (14) in Form einer kreisförmigen Scheibe (15) befindet, das mit einem Antriebsmittel (17) verkeilt ist und eine Vielzahl von Blättern (18) aufweist, von denen jedes wenigstens eine ebene Fläche (180) besitzt, welche die Achse des Schafts (16) des Laufrads enthält und einen Umriss (19) hat, der radial zur Schnecke (13) hin divergiert, ausgehend vom mittleren Bereich (150) der kreisförmigen Scheibe (15), **dadurch gekennzeichnet, dass** der Boden des Behälters (2) wenigstens einen rotierenden Schneckenzuführer (7) umfasst, der mit wenigstens einem Paar Spiralen (71, 72) versehen ist, mit einer entgegengesetzten Windungsrichtung, um das verarbeitete Material in einen Zwischenbereich (21) des wenigstens einen Schneckenzuführers (7) zu leiten, und dadurch, dass das Laufrad (14) einen Spitzkegel (50) umfasst, der in Entsprechung ihres jeweiligen mittleren Bereichs (118) an den Blättern (18) befestigt ist,
wobei dieser Spitzkegel (50) an seinem Außenrand mit Cuttem (51) versehen ist, die geeignet sind, den Fluss (200) des in die Schnecke (13) des Gebläses (8) einlaufenden Materials durchzuleiten.

2. Schneid-Mix-Vorrichtung und Strohstreuwagen (1) gemäß Patentanspruch 1), **dadurch gekennzeichnet, dass** die Schnecke (13) des Gebläses (8) von der Wand des Behälters (2) des Wagens, an der sie angeschlossen ist, abgehoben befestigt ist, so dass ein freier Abstand (190) entsteht, um die Außenluft in die Saugöffnung (20) der Schnecke (13) selbst zu leiten, wobei diese freie Öffnung (190) durch einen Verschluss (30) abgesperrt wird, der gleitend an der Schnecke (13) angebracht ist.

3. Schneid-Mix-Vorrichtung und Strohstreuwagen (1) gemäß Patentanspruch 1), **dadurch gekennzeichnet, dass** jedes der Blätter (18) aus einer flachen Platte gefertigt ist, dessen Umriss (19) gemäß der radialen Richtung so geformt ist, dass Folgendes entsteht:
- ein mittlerer Bereich (118) von im Wesentlichen rechteckiger Form, befestigt am Schaft (16), der die Antriebsvorrichtung (17) mit der kreisförmigen Scheibe (15) verbindet;
- ein im Wesentlichen rechteckiger, in der Nähe der Schnecke (13) befindlicher Endbereich (318);
- einen im Wesentlichen trapezoidförmigen Zwischenbereich (218), dessen kleinere Grundseite mit dem mittleren Bereich (118) verbunden ist und dessen größere Grundseite mit dem Endbereich (318) verbunden ist.

4. Schneid-Mix-Vorrichtung und Strohstreuwagen (1) gemäß Patentanspruch 1), **dadurch gekennzeichnet, dass** der Behälter (2) wenigstens eine Tür (5) zur Entladung des verarbeiteten Materials aufweist, die in Entsprechung des mittleren Bereichs (21) des wenigstens einen Schneckenzuführers (7) und der Saugöffnung (20) in der Schnecke (13) des Gebläses (8) gegenüber liegend positioniert ist.

5. Schneid-Mix-Vorrichtung und Strohstreuwagen (1) gemäß Patentanspruch 1), **dadurch gekennzeichnet, dass** die Ausgabeöffnung (10) an einem Ende der Ausgabeleitung (9) abgeschlossen ist durch Zwischenfügung einer Dreheinheit (11) mit einem Drehgelenk (111), die die Ausgabeleitung (9) mit der Ausgabeöffnung (10) verbindet und die in Bewegung gesetzt wird durch eine mechanisch an einem Motor (120) angeschlossene Kette (121).

6. Schneid-Mix-Vorrichtung und Strohstreuwagen (1) gemäß Patentanspruch 5), **dadurch gekennzeichnet, dass** der Motor ein Elektromotor ist.

7. Schneid-Mix-Vorrichtung und Strohstreuwagen (1) gemäß Patentanspruch 1), **dadurch gekennzeichnet, dass** die Antriebsvorrichtung des Laufrads (14) ein Hydraulikmotor (17) ist.

8. Schneid-Mix-Vorrichtung und Strohstreuwagen (1) gemäß Patentanspruch 1), **dadurch gekennzeichnet, dass** die Anzahl der Blätter (18) vier beträgt und dass diese orthogonal zueinander angeordnet sind.

## Revendications

1. Chariot découpeur - mélangeur - répandeur de paille (1) pour produits fibreux comprenant:
- un conteneur (2) équipé d'au moins une ouverture (3) pour l'introduction du matériel à traiter;
- au moins un groupe de distribution (6) indiqué pour convoyer le matériel traité à l'extérieur dudit conteneur (2) comprenant un canal de refoulement (9) qui présente une extrémité reliée à un ventilateur (8) qui aspire le matériel à l'intérieur dudit conteneur (2) et l'extrémité opposée munie d'au moins une ouverture de refoulement (10) indiqué pour diriger à l'extérieur le jet dudit matériel traité,
ledit ventilateur comprenant une volute (13) fixée sur un côté dudit chariot (2) et communiquant avec l'intérieur dudit chariot au moyen d'une ouverture d'aspiration (20) située sur le côté opposé d'une porte d'évacuation (5) présente dans ledit conteneur (2),
à l'intérieur de ladite volute (13) étant présente une roue (14) constituée d'un disque circulaire (15) fixée à des moyens de motorisation (17) et équipée d'une pluralité de lames (18), chacune présentant au moins une surface planaire (180) contenant l'axe de la tige (16) de ladite roue et ayant un profil (19) qui diverge vers ladite volute (13) commençant de la zone centrale (150) dudit disque circulaire (15) **caractérisé en ce que** le fond dudit conteneur (2) comprend au moins un distributeur à vis rotatif (7) équipé d'au moins une paire de spirales (71, 72) avec une direction d'enroulement opposée pour convoyer le matériel traité dans la zone intermédiaire (21) dudit au moins un distributeur à vis (7), et **en ce que** ladite roue (14) présente une ogive (50) fixée auxdites lames (18) à hauteur de la zone centrale (118) de chacune de celles-ci, ladite ogive (50) étant équipée de couteaux (51) sur le périmètre extérieur de ladite ogive (50), lesdits couteaux étant indiqués pour convoyer ledit écoulement (200) de matériel qui entre dans ladite volute (13) dudit ventilateur (8).

2. Chariot découpeur - mélangeur - répandeur de paille (1) selon la revendication 1) **caractérisé en ce que** ladite volute (13) dudit ventilateur (8) est fixée espacée de la paroi du conteneur (2) dudit chariot auquel il est relié, afin de définir un espace libre (190) de convoyance de l'air extérieur vers l'ouverture d'aspiration (20) de la volute (13), ladite hauteur libre (190) étant interceptée par un volet (30) relié d'une manière coulissante à ladite volute (13).

3. Chariot découpeur - mélangeur - répandeur de paille (1) selon la revendication 1) **caractérisé en ce que** chacune desdites lames (18) est réalisée avec une tôle plate dont le contour (19), selon la direction radiale, a une forme indiquée pour présenter:
- une zone centrale (118) d'une forme essentiellement rectangulaire, fixée à la tige (16) qui relie lesdits moyens de motorisation (17) audit disque circulaire (15);
- une zone finale (318) située à côté de ladite volute (13) et présentant une forme essentiellement rectangulaire;
- une zone intermédiaire (218) d'une forme essentiellement trapézoïdale dont la petite base est reliée à ladite zone centrale (118) et dont la grande base est reliée à ladite zone finale (318).

4. Chariot découpeur - mélangeur - répandeur de paille (1) selon la revendication 1) **caractérisé en ce que** ledit conteneur (2) est équipé d'au moins une porte (5) pour l'évacuation dudit matériel traité, située à hauteur de ladite zone intermédiaire (21) dudit au moins un distributeur à vis (7) et opposée à ladite ouverture d'aspiration (20) réalisée dans ladite volute (13) dudit ventilateur (8).

5. Chariot découpeur - mélangeur - répandeur de paille (1) selon la revendication 1) **caractérisé en ce que** ladite ouverture de refoulement (10) est reliée à une extrémité dudit canal de refoulement (9) grâce à l'interposition d'un groupe de rotation (11) comprenant un joint de rotation (111) qui relie ledit canal de refoulement (9) à ladite ouverture de refoulement (10) et qui est actionné par une chaîne (121) relié d'une manière mécanique à un moteur (120).

6. Chariot découpeur - mélangeur - répandeur de paille (1) selon la revendication 5) **caractérisé en ce que** ledit moteur (120) est du type électrique.

7. Chariot découpeur - mélangeur - répandeur de paille (1) selon la revendication 1) **caractérisé en ce que** lesdits moyens de motorisation de ladite roue (14) se composent d'un moteur hydraulique (17).

8. Chariot découpeur - mélangeur - répandeur de paille (1) selon la revendication 1) **caractérisé en ce que** lesdites lames (18) sont au nombre de quatre et sont positionnées d'une manière orthogonale entre elles.
